# EUROPÄISCHE PATENTANMELDUNG

(11) **EP 4 339 457 A1**
(43) Veröffentlichungstag der Anmeldung: **20.03.2024**
(21) Anmeldenummer: 22196416.6
(22) Anmeldetag: 19.09.2022
(51) Int. Cl.: F03D 80/00

(54) **VERFAHREN ZUR ERRICHTUNG UND/ODER UMRÜSTUNG EINER WINDENERGIEANLAGE, VERWENDUNG EINES TURMS EINER WINDENERGIEANLAGE UND WINDENERGIEANLAGE**

(71) Anmelder: Wobben Properties GmbH, 26607 Aurich (DE)
(72) Erfinder: Lütkemeyer, Stefan, 26605 Aurich (DE)
(74) Vertreter: Eisenführ Speiser

(57) **Zusammenfassung**

Die Erfindung betrifft ein Verfahren zur Errichtung und/oder Umrüstung einer Windenergieanlage, die Verwendung eines Turms einer Windenergieanlage und eine Windenergieanlage. Das Verfahren umfasst Demontieren einer ersten Gondel von einem Turm einer Windenergieanlage, und Montieren einer zweiten Gondel auf dem Turm der Windenergieanlage.

## Beschreibung

Die Erfindung betrifft ein Verfahren zur Errichtung und/oder Umrüstung einer Windenergieanlage, die Verwendung eines Turms einer Windenergieanlage und eine Windenergieanlage.

Windenergieanlagen, insbesondere an Land aufgestellte, sogenannte "on-shore"-Windenergieanlagen, haben meist eine Lebensdauer von ca. 20 bis 25 Jahren. Am Ende der Lebensdauer einer Windenergieanlage oder aufgrund einer Stilllegung aus anderen Gründen oder bei geänderten Bedürfnissen, kann es erforderlich und/oder erwünscht sein, eine Windenergieanlage zurückzubauen, evtl. sogar vollständig. Dieser Rückbau ist mit einer Vielzahl von Herausforderungen verbunden. Es kann ferner erforderlich und/oder erwünscht sein, anstelle der existierenden Windenergieanlage eine andere Windenergieanlage einzusetzen, insbesondere mit einer höheren Nennleistung, wobei ferner vorzugsweise derselbe Standort genutzt wird (sogenanntes Repowering). Auch das Repowering ist mit einer Vielzahl von Herausforderungen verbunden.

Es ist daher eine Aufgabe der vorliegenden Erfindung, ein Verfahren zur Errichtung und/oder Umrüstung einer Windenergieanlage, eine Verwendung eines Turms einer Windenergieanlage und eine Windenergieanlage bereitzustellen, welche ein verbessertes Repowering von Windenergieanlagen ermöglichen. Insbesondere ist es eine Aufgabe der vorliegenden Erfindung, ein Verfahren zur Errichtung und/oder Umrüstung einer Windenergieanlage, eine Verwendung eines Turms einer Windenergieanlage und eine Windenergieanlage bereitzustellen, welche gegenüber existierenden Lösungen kostengünstiger und/oder wirtschaftlicher und/oder ressourcenschonender sind.

Diese Aufgabe wird erfindungsgemäß gelöst durch ein Verfahren zur Errichtung und/oder Umrüstung einer Windenergieanlage, umfassend Demontieren einer ersten Gondel von einem Turm einer Windenergieanlage, und Montieren einer zweiten Gondel auf dem Turm der Windenergieanlage.

Die auf einem Turm der Windenergieanlage angeordnete Gondel umfasst vorzugsweise einen aerodynamischen Rotor, der vorzugsweise drei Rotorblätter aufweist. Vorzugsweise wird der aerodynamische Rotor einer Windenergieanlage im Betrieb durch den Wind in eine Drehbewegung versetzt und dreht somit vorzugsweise auch einen elektrodynamischen Rotor oder Läufer eines Generators, welcher vorzugsweise direkt oder indirekt mit dem aerodynamischen Rotor gekoppelt ist. Der elektrische Generator kann beispielsweise in der Gondel angeordnet sein und elektrische Energie erzeugen. Die Pitchwinkel der Rotorblätter können vorzugsweise durch Pitchmotoren verändert werden, die vorzugsweise an den Rotorblattwurzeln der jeweiligen Rotorblätter angeordnet sein können.

Sofern im Folgenden nicht anders angegeben, wird unter einem Rotor ein aerodynamischer Rotor verstanden.

Türme von Windenergieanlagen weisen in der Regel Turmhöhen auf, welche die Nabenhöhe und/oder den Rotordurchmesser der Windenergieanlage begründen bzw. begrenzen. Türme von Windenergieanlagen bestehen vorzugsweise im Wesentlichen aus Beton und/oder Stahl oder umfassen diese Materialien. Die Bandbreite der Ausführungen für Türme reicht von Gitterkonstruktionen über Stahlrohrtürme mit oder ohne Seilabspannung bis hin zu Betonbauten, die als massive Konstruktionen ausgebildet und/oder aus einzelnen Segmenten zusammengesetzt und ggf. mit internen und/oder externen Spanngliedern vorgespannt sein können.

Gitterkonstruktionen stellen in der Regel hohe und steife Turmkonstruktionen bereit. Stahlrohrtürme umfassen vorzugsweise mehrere Segmente. Stahlrohrtürme können als abgespannte Türme bereitgestellt werden, die zusätzliche Seile, Drähte oder Stützen aufweisen, die den Stahlrohrturm in einer oder mehrere Richtungen abstützen. Ferner besteht die Möglichkeit, freitragende Stahlrohrtürme vorzusehen, die in der Regel keine Abspannung aufweisen.

Darüber hinaus werden oft Betonbauweisen für Türme vorgesehen. Solche Betontürme werden vorzugsweise als schlaffe, das heißt mit einer üblichen Stahlbewehrung versehene Türme realisiert, oder es werden vorgespannte Spannbetontürme eingesetzt. Aufgrund des hohen Gewichts von Betontürmen werden diese vorzugsweise an einem Aufstellort gegossen oder der Turm wird aus einzelnen Segmenten zusammengesetzt, wobei die einzelnen Segmente vorgefertigt sein können.

Türme können zylindrische und/oder konische Abschnitte, insbesondere entlang ihrer Längserstreckung, aufweisen, wobei Türme oftmals zylindrische und konische Anteile umfassen. Auch mehr- oder vieleckige Querschnitte, wie beispielsweise polygonale Querschnitte, können für Türme eingesetzt werden.

Windenergieanlagen haben derzeit eine Lebensdauer von ca. 20 bis 25 Jahren. Nach Erreichen des Endes der Lebensdauer oder bei sonstiger Stilllegung ist es gegebenenfalls gewünscht oder sogar gesetzlich vorgeschrieben, die Windenergieanlagen vollständig oder teilweise abzubauen. Wiederverwendbare Komponenten werden dabei bevorzugt so behandelt, dass sie wiedereingesetzt werden können. Komponenten von Windenergieanlagen können nach dem Rückbau auch einem Recycling- oder Entsorgungsprozess zugeführt werden. Der Rückbau und die Demontage von Windenergieanlagen sind nicht einfach und müssen in der Regel durch geschultes Fachpersonal mit ausreichender Erfahrung durchgeführt werden. Ferner ist es oft erwünscht, am Standort einer Windenergieanlage auch nach Ende von deren Lebensdauer oder nach deren Außerbetriebnahme eine weitere, ggf. leistungsfähigere Windenergieanlage zu betreiben. Allerdings erfordert dieses sogenannte Repowering meist einen vollständigen Neubau, insbesondere auch eine neue Bemessung der verschiedenen Komponenten der Windenergieanlage.

Die Erfindung beruht unter anderem auf der Erkenntnis, Türme für Windenergieanlagen beim Repowering wiederzuverwenden, indem die Gondel der außer Betrieb zu nehmenden Windenergieanlage demontiert wird und auf dem Turm eine neue Gondel montiert wird, mit der die Windenergieanlage neu in Betrieb genommen wird. Die Erfindung beruht ferner unter anderem auf der Erkenntnis, dass die Tragfähigkeit eines Turms einer Windenergieanlage ausreichend sein kann und/oder so verstärkt werden kann, dass der Turm auch nach Ende der Lebensdauer der Windenergieanlage als Komponente einer neuen Windenergieanlage, die den bestehenden Turm zusammen mit einer neuen Gondel nutzt, eingesetzt werden kann. Auf diese Weise können nicht nur erhebliche Kosten für den Abriss und die Entsorgung des bestehenden Turms gespart werden, sondern auch die Kosten und der Zeitaufwand für die Errichtung eines neuen Turms. Ferner werden auf diese Weise erhebliche Ressourcen eingespart. Insgesamt steigt auf diese Weise die Wirtschaftlichkeit des Repowerings bzw. der neuen Windenergieanlage erheblich.

Unter Repowering wird hier insbesondere die Durchführung des hier beschriebenen Verfahrens zur Errichtung und/oder Umrüstung einer Windenergieanlage verstanden. Eine Erhöhung der Nennleistungen und/oder eine Vergrößerung des Rotordurchmessers ist beim Repowering bevorzugt, jedoch nicht zwingend. Es kann auch von Vorteil sein, beim Repowering im Ergebnis mit der zweiten Gondel eine Windenergieanlage mit gleicher oder geringerer Nennleistung und/oder mit gleichem oder geringem Rotordurchmesser zu realisieren. Grundsätzlicher Vorteil des Repowerings ist es, auch nach Ablauf der Lebensdauer einer ersten Windenergieanlage den Standort auch weiterhin für eine Windenergieanlage zu nutzen, indem das hier beschriebene Verfahren zur Errichtung und/oder Umrüstung einer Windenergieanlage zur Anwendung kommt.

Unter Wiederverendung eines Turms einer Windenergieanlage wird in dieser Beschreibung insbesondere verstanden, einen Turm nach Nutzung mit einer ersten Gondel, die vorzugsweise einen ersten Rotor mit einem ersten Rotordurchmesser aufweist, erneut zu nutzen mit einer zweiten Gondel, die vorzugsweise einen zweiten Rotor mit einem ersten Rotordurchmesser aufweist. Hierzu wird vorzugsweise zunächst die erste Gondel vom Turm demontiert und anschließend die zweite Gondel auf dem Turm montiert. Die zweite Gondel ist insbesondere von der ersten Gondel verschieden. Die zweite Gondel kann vorzugsweise eine neu hergestellte Gondel, die zuvor mit diesem Turm betriebene und auf-/oder umgerüstete Gondel oder eine zuvor mit einer anderen Turm betriebene, und ggf. auf-/oder umgerüstete Gondel sein.

Gemäß einer bevorzugten Ausführungsform ist vorgesehen, dass der Turm der Windenergieanlage vordem Montieren der zweiten Gondel mit der ersten Gondel betrieben wurde, insbesondere für mehr als 1 Jahr, vorzugsweise für mehr als 5 Jahre oder mehr als 10 Jahre. Die Vorteile der hier beschriebenen Lösung kommen insbesondere dann zur Geltung, wenn Türme von Windenergieanlagen wiederverwendet werden können, die zuvor für einen längeren Zeitraum betrieben wurden und/oder der Turm ein Betriebsalter von mehr als 1 Jahr, vorzugsweise mehr als 5 Jahren oder mehr als 10 Jahren hat. Ferner ist es insbesondere bevorzugt, dass ein Nachweis, insbesondere ein statischer und/oder betriebssicherheitstechnischer Nachweis, einer erneuten Betriebszeit des Turms von mindestens 5 Jahren, insbesondere mindestens 10 Jahren, vorzugsweise von bis zu 20 Jahren, mit der zweiten Gondel erfolgt. Dazu kann, wie auch im Weiteren noch beschrieben, eine Ertüchtigen des Turms vorgesehen sein, insbesondere eine Verstärkung der tragenden Struktur.

Als Betriebsalter eines Turms wird hier insbesondere die Dauer verstanden, die seit der ersten Inbetriebnahme einer Windenergieanlage mit diesem Turm vergangen ist und/oder die bisherige Einsatzdauer der Windenergieanlage mit diesem Turm.

Es ist ferner bevorzugt, dass der Turm der Windenergieanlage vor dem Montieren der zweiten Gondel in seiner Höhe verändert, vorzugsweise reduziert, wird. Dies ermöglicht eine höhere oder geringere Nabenhöhe. Insbesondere mit einer niedrigeren Turmhöhe und/oder Nabenhöhe kann der Turm mit einer Gondel mit einem größeren Rotor eingesetzt werden, wobei die Gesamthöhe der Windenergieanlage umfassend den Turm und die Gondel mit Rotor nur geringfügig erhöht wird oder gleichbleiben oder sogar reduziert werden kann.

Bevorzugt ist insbesondere, dass der Turm der Windenergieanlage vor dem Montieren der zweiten Gondel in seiner Höhe verändert, vorzugsweise reduziert, wird durch Entfernen und/oder Ersetzen und/oder Hinzufügen von Turmabschnitten, insbesondere am oberen Ende des Turms. Turmabschnitte am oberen Ende des Turms können vorzugsweise als Stahlsegmente ausgebildet sein und/oder ausgebildet sein zur Aufnahme und/oder Befestigung der Gondel. Es ist daher vorteilhaft, bei der Wiederverwendung des Turms einen oder mehrere Turmabschnitte, insbesondere am oberen Ende des Turms, zu entfernen und/oder zu ersetzen. Auf diese Weise kann der Anschluss einer neuen Gondel am oberen Ende des Turms erleichtert werden. Gleichzeitig kann hierdurch auch die Höhe des Turms auf die neue Gondel angepasst werden, beispielsweise durch Realisierung einer geringeren Nabenhöhe, um einen größeren Rotor bei gleicher oder nur geringfügig höheren Gesamthöhe einsetzen zu können.

Ferner ist bevorzugt, dass der Turm der Windenergieanlage vor dem Montieren der zweiten Gondel in seiner Höhe um mindestens 3%, vorzugsweise mindestens 5%, insbesondere 10% oder mindestens 15%, verändert, vorzugsweise reduziert, wird. Diese Werte sind bevorzugt, um in vorteilhafter Weise einen größeren Rotor mit der zweiten Gondel nutzen zu können. Vorzugsweise wird eine Gesamthöhe der Windenergieanlage mit der zweiten Gondel von über 150m, insbesondere von etwa 180m oder etwa 200m angestrebt. Hierfür ist eine Flexibilität in der Dimensionierung von Rotordurchmesser zu Nabenhöhe von Vorteil.

Eine bevorzugte Weiterbildung zeichnet sich dadurch aus, dass ein Rotor der zweiten Gondel einen größeren Rotordurchmesser aufweist als ein Rotor der ersten Gondel, insbesondere einen um mindestens 10%, vorzugsweise mindestens 25%, insbesondere 50% oder mindestens 70%, größeren Rotordurchmesser. Diese Werte sind bevorzugt, um in vorteilhafter Weise höhere Nennleistungen mit der zweiten Gondel realisieren zu können. Ein Rotor mit einem größeren Rotordurchmesser kann auch als größerer Rotor bezeichnet werden.

Eine weitere bevorzugte Weiterbildung ist dadurch gekennzeichnet, dass die Windenergieanlage mit der zweiten Gondel eine höhere Nennleistung aufweist als mit der ersten Gondel, insbesondere eine um mindestens 10%, vorzugsweise mindestens 25%, insbesondere 50% oder mindestens 70%, größere Nennleistung. Diese Werte sind bevorzugt, um in vorteilhafter Weise ein wirtschaftlich attraktives Repowering mit der zweiten Gondel realisieren zu können.

Vorzugsweise ist ferner das Nutzen einer ersten elektrischen, vorzugsweise erweiterten, Infrastruktur des Turms mit der zweiten Gondel vorgesehen. Beispielsweise kann die vorhandene elektrische Infrastruktur, wie etwa Umrichter, auch nach dem Repowering weiter genutzt werden, ggf. mit einer Erweiterung der Leistung der ersten elektrischen Infrastruktur des Turms.

Eine weitere bevorzugte Ausführungsform ist gekennzeichnet durch Austauschen der ersten elektrischen Infrastruktur des Turms gegen eine zweite elektrische Infrastruktur und das Nutzen der zweiten elektrischen Infrastruktur mit der zweiten Gondel, wobei vorzugweise die zweite elektrische Infrastruktur eine höhere Leistung aufweist als die erste elektrische Infrastruktur. Dies hat den Vorteil, dass der Einsatz und/oder die Leistungsfähigkeit des Windenergieanlage mit der zweiten Gondel nicht durch die erste elektrische Infrastruktur und ggf. deren Erweiterbarkeit begrenzt ist, sondern ein hoher Freiheitsgrad bei der Gestaltung des Repowerings, auch in Bezug auf die Leistung, erzielt werden kann.

In einer weiteren bevorzugten Ausführungsform ist vorgesehen, dass die Windenergieanlage nach dem Montieren der zweiten Gondel eine Gesamthöhe von maximal 200m aufweist. Die Gesamthöhe beinhaltet vorzugsweise den Turm und die Gondel mit Rotor. An vielen Standorten von Windenergieanlagen ist die Gesamthöhe auf maximal 200m begrenzt. Es ist daher für das Repowering von Vorteil, wenn auch nach der Umrüstung der Windenergieanlage und dem Montieren der zweiten Gondel die Gesamthöhe maximal 200m beträgt.

Dabei ist insbesondere bevorzugt, dass die Windenergieanlage mit der ersten Gondel, insbesondere vor deren Demontage, und ferner vorzugsweise vor dem Montieren der zweiten Gondel, eine Gesamthöhe von maximal 200m aufweist.

Wenn beim Repowering eine Windenergieanlage umgerüstet werden soll, die zunächst eine Gesamthöhe von maximal 200m aufweist, und beim Repowering eine zweite Gondel mit einem größeren Rotor eingesetzt werden soll, ist insbesondere eine Reduzierung der Turmhöhe und/oder der Nabenhöhe von Vorteil, damit die Windenergieanlage auch nach dem Repowering eine Gesamthöhe von maximal 200m aufweist. Vorzugsweise können bei der Ermittlung der Gesamthöhe nach dem Repowering verschiedenen Faktoren berücksichtigt werden, wie beispielsweise ein Baulastradius (kreisförmige Baulastfläche mit einem Radius, der 50 % der Gesamthöhe der Windenergieanlage). Auch kann die Gesamthöhe der Windenergieanlage vorzugsweise eine im Zuge des Repowerings zu dimensionierende Größe sein.

Eine weitere bevorzugte Fortbildung zeichnet sich dadurch aus, dass der Turm ganz oder teilweise als Betonturm ausgebildet ist. In einer weiteren bevorzugten Ausführungsform ist vorgesehen, dass der Turm ganz oderteilweise als Stahlturm ausgebildet ist. Insbesondere ist es bevorzugt, dass ein oberer Abschnitt des Turms, insbesondere ein zur Aufnahme der ersten Gondel und/oder zweiten Gondel ausgebildeter Abschnitt, ein, zwei oder mehrere Stahlsegmente umfasst oder aus diesen besteht. Das hier beschriebene Verfahren ist mit verschiedenen Bauvarianten von Türmen einsetzbar. Die Ausbildung von Stahlsegmenten am oberen Ende des Turms hat den Vorteil, dass diese einfach entfernt und/oder ausgetauscht werden können, was eine besonders kostengünstige und sichere Möglichkeit der Veränderung der Höhe des Turms darstellt.

Eine weitere bevorzugte Weiterbildung ist gekennzeichnet durch Demontieren eines, zwei, mehrere oder aller Stahlsegmente des Turms, insbesondere nach Demontage der ersten Gondel und/oder vor Montage der zweiten Gondel. Hierdurch ergibt sich eine besonders vorteilhafte Möglichkeit, die Turmhöhe und/oder Nabenhöhe anzupassen Ferner ist das Verfahren vorzugsweise gekennzeichnet durch Montieren eines, zweier oder mehrere zweiter Stahlsegmente, insbesondere nach Demontage der ersten Gondel und/oder vor Montage der zweiten Gondel, insbesondere zum Anschluss der zweiten Gondel auf dem Turm. Dies hat den Vorteil, dass hierdurch auf besonders einfache Weise der Turm für die Aufnahme der zweiten Gondel, die ggf. zur ersten Gondel unterschiedliche Anschlusseigenschaften aufweist, angepasst werden kann.

Eine weitere bevorzugte Weiterbildung ist gekennzeichnet durch Ertüchtigen des Turms. Eine Ertüchtigung des Turms kann insbesondere eine Verstärkung der Tragfähigkeit des Turms umfassen und/oder bedeuten. Auf diese Weise kann der Turm wiederverendet werden, auch wenn der Einsatz mit der zweiten Gondel höhere Anforderungen an den Turm, insbesondere dessen Tragfähigkeit, beinhaltet.

Das Ertüchtigen des Turms kann vorzugsweise erfolgen durch Vorsehen einer, insbesondere zusätzlichen, externen Verspannung. Dies kann zum Beispiel durch, insbesondere nachträgliches, Anbringen und/oder Austauschen und/oder Ergänzen von externen und/oder internen Spanngliedern erfolgen.

Das Ertüchtigen des Turms kann ferner vorzugsweise erfolgen durch Vorsehen einer Faserverstärkung, insbesondere einer Kohlefaserverstärkung, die beispielsweise Kohlenstofffaserverstärkten Kunststoff (CFK) enthält oder aus diesem besteht. Vorzugsweise können CFK Lamellen oder sogenannte Klebelamellen zum Einsatz kommen. Eine Verstärkung kann insbesondere für die tragende Struktur des Turms vorgesehen werden.

Ferner vorzugsweise dient das Ertüchtigen des Turms zur Erbringung des Nachweises einer Lebensdauer von mindestens 5 Jahren, insbesondere mindestens 10 Jahren, vorzugsweise bis zu 20 Jahren nach Montage der zweiten Gondel. Ein Repowering ist insbesondere dann von Vorteil, wenn auch die neue Windenergieanlage mit der zweiten Gondel für eine Lebensdauer von mindestens 5 Jahren, insbesondere mindestens 10 Jahren, vorzugsweise bis zu 20 Jahren eingesetzt werden kann.

Gemäß einem weiteren Aspekt der Erfindung wird die eingangs genannte Aufgabe gelöst durch die Verwendung eines Turms einer zuvor mit einer ersten Gondel betriebenen Windenergieanlage mit einer zweiten Gondel.

Dies bedeutet insbesondere den Turm für ein Repowering zu nutzen, bei dem vorzugsweise eine erste Gondel, insbesondere nach einer Betriebsdauer von über 1 Jahr, demontiert wird und eine zweite Gondel nach dem hier beschriebenen Verfahren montiert wird.

Gemäß einem weiteren Aspekt der Erfindung wird die eingangs genannte Aufgabe gelöst durch eine Windenergieanlage, umfassend einen Turm, und eine auf dem Turm angeordnete Gondel, dadurch gekennzeichnet, dass der Turm ein höheres Betriebsalter aufweist als die Gondel, insbesondere ein um ein Vielfaches höheres Betriebsalter, vorzugsweise ein Betriebsalter, das um mehrere Jahre, insbesondere mehr als 10 Jahre, älter ist als das der Gondel.

Eine bevorzugte Weiterbildung der Windenergieanlage zeichnet sich dadurch aus, dass die Windenergieanlage eine Gesamthöhe von maximal 200m aufweist.

Wie beschrieben können vorzugsweise bei der Ermittlung der Gesamthöhe nach dem Repowering verschiedenen Faktoren wie beispielsweise der Baulastradius, berücksichtigt werden, oder es kann die Gesamthöhe der Windenergieanlage eine im Zuge des Repowerings zu dimensionierende Größe sein.

Ferner vorzugsweise kann die Erbringung des Nachweises einer Lebensdauer von mindestens 5 Jahren, insbesondere mindestens 10 Jahre, vorzugsweise bis zu 20 Jahren nach Montage der zweiten Gondel erbracht werden durch eine veränderte Betriebsführung, wie beispielsweise eine Leistungsreduzierung und/oder eine besondere Überwachung der Betriebslasten und/oder eine Abschaltung bei Starkwind. Vorzugsweise wird hierbei die Wirtschaftlichkeit der Windenergieanlage mit berücksichtigt.

Gemäß einer bevorzugten Ausführungsform der Windenergieanlage ist vorgesehen, dass der Turm an seinem oberen Abschnitt, insbesondere zur Aufnahme der Gondel, ein, zwei oder mehrere Stahlsegmente, aufweist, die übrigen Abschnitte des Turms ein höheres Betriebsalter aufweisen als das bzw. die Stahlsegmente, insbesondere ein um ein Vielfaches höheres Betriebsalter, vorzugsweise ein Betriebsalter, das um mehrere Jahre, insbesondere mehr als 10 Jahre, älter ist als das der Stahlsegmente.

In einer weiteren bevorzugten Ausführungsform der Windenergieanlage ist vorgesehen, dass die Windenergieanlage in einem zuvor beschriebenen Verfahren errichtet und/oder umgerüstet wurde.

Hinsichtlich der Vorteile, bevorzugten Ausführungsformen und Details der verschiedenen Aspekte und ihrer bevorzugten Ausführungsformen wird ebenfalls auf die entsprechenden Vorteile, bevorzugten Ausführungsformen und Details verwiesen, die mit Bezug auf die jeweils anderen Aspekte beschrieben sind.

Weitere vorteilhafte Ausführungsformen ergeben sich aus der Kombination einzelner, mehrerer oder aller der hier beschriebenen bevorzugten Merkmale.

Bevorzugte Ausführungsbeispiele werden beispielhaft anhand der beiliegenden Figuren beschrieben. Es zeigen:
- Figur 1:: eine schematische Darstellung einer Windenergieanlage;
- Figur 2:: eine schematische Darstellung einer Windenergieanlage mit einer ersten Gondel (links) und einer zweiten Gondel (rechts); und
- Figur 3:: ein schematisches Ablaufdiagramm eines Verfahrens zur Errichtung und/oder Umrüstung einer Windenergieanlage.

In den Figuren sind gleiche oder im Wesentlichen funktionsgleiche Elemente mit den gleichen Bezugszeichen versehen. Allgemeine Beschreibungen beziehen sich in der Regel auf alle Ausführungsbeispiele, sofern Unterschiede nicht explizit angegeben sind.

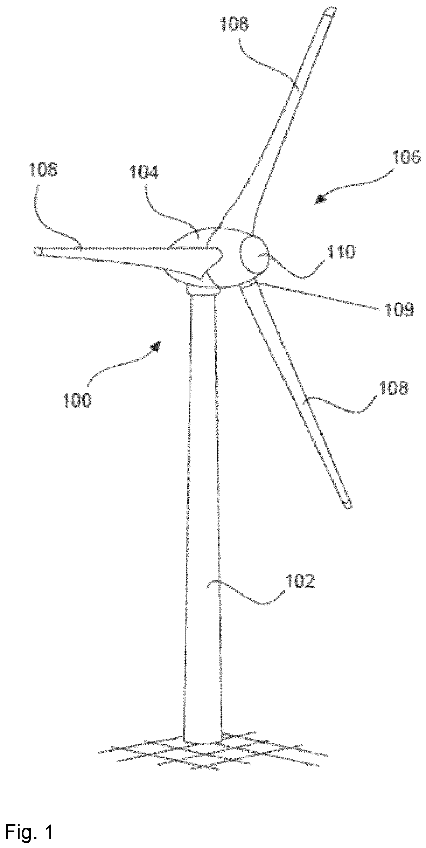

Fig. 1 zeigt eine schematische Darstellung einer Windenergieanlage. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

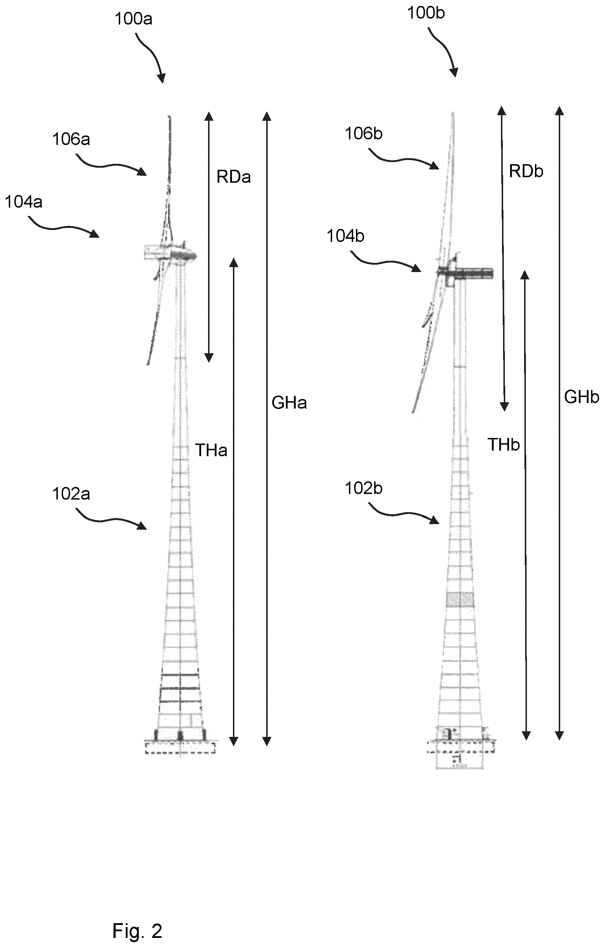

Figur 2 zeigt links eine Windenergieanlage 102a mit einer ersten Gondel 104a vor dem Repowering und rechts die Windenergieanlage 102b mit einer zweiten Gondel 104b nach dem Repowering. Der Turm 102a, b wird dabei wiederverwendet. Allerdings ist zu erkennen, dass der zweite Rotor 106b der zweiten Gondel 104b einen größeren Rotordurchmesser RDb aufweist als der erste Rotor 106a der ersten Gondel 104a. Der Rotordurchmesser RDa des ersten Rotors 106a der ersten Gondel 104a ist somit kleiner als der Rotordurchmesser RDb des zweiten Rotors 106b der zweiten Gondel 104b. Dennoch ist die Gesamthöhe GHa der Windenergieanlage 102a vor dem Repowering im Wesentlichen identisch mit der Gesamthöhe GHb der Windenergieanlage 102b nach dem Repowering. Dies wird ermöglicht dadurch, dass die Turmhöhe THa des Turms 102a nach der Demontage der ersten Gondel 104a reduziert wird, beispielsweise durch Entfernen und/oder Ersetzen von Stahlsegmenten am oberen Ende des Turms 102a,b.

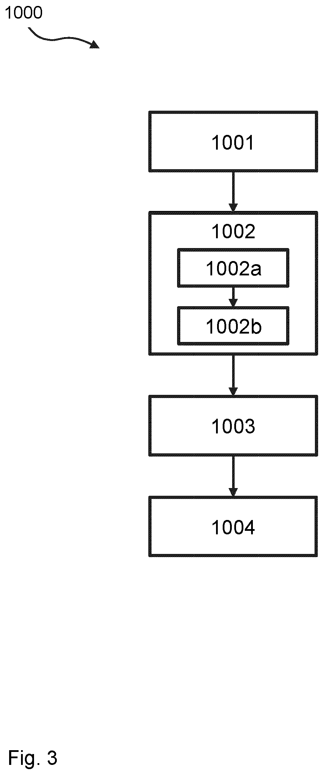

In Figur 3 ist schematisch ein Ablaufdiagramm eines Verfahren 1000 zur Errichtung und/oder Umrüstung einer Windenergieanlage 100a, b dargestellt. Das Verfahren 1000 gemäß Figur 3 umfasst in einem Schritt 1001 das Demontieren der ersten Gondel (104a) von dem Turm (102a, b) der Windenergieanlage, und vorzugsweise in einem Schritt 1002 das Verändern, insbesondere Reduzieren, der Höhe des Turms (102a, b), bevor in einem Schritt 1004 die zweite Gondel (104b) montiert wird.

Das Verändern, insbesondere Reduzieren, der Höhe des Turms (102a, b beinhaltet vorzugsweise in einem Schritt 1002a das Demontieren eines, zwei, mehrere oder aller Stahlsegmente des Turms, insbesondere nach Demontage der ersten Gondel (104a) und/oder vor Montage der zweiten Gondel (104b), und/oder in einem Schritt 1002b das Montieren eines, zweier oder mehrere zweiter Stahlsegmente, insbesondere nach Demontage der ersten Gondel und/oder vor Montage der zweiten Gondel (104b), insbesondere zum Anschluss der zweiten Gondel 104b auf dem Turm (102a, b).

Zusätzlich kann der Schritt 1003 Ertüchtigen des Turms (102a, b vorgesehen sein, insbesondere durch Vorsehen einer, insbesondere zusätzlichen, externen Verspannung und/oder durch Vorsehen einer Faserverstärkung, insbesondere einer Kohlefaserverstärkung, vorzugsweise zur Erbringung des Nachweises einer Lebensdauer von mindestens 20 Jahren nach Montage der zweiten Gondel (104b). Das Ertüchtigen des Turms erfolgt vorzugsweise vor oder parallel zu der Montage der zweiten Gondel 104b.

Die hier beschriebene Lösung ermöglicht es in vorteilhafter Weise, dass der Turm auch nach Ende der Lebensdauer der Windenergieanlage als Komponente einer neuen Windenergieanlage, die den bestehenden Turm zusammen mit einer neuen Gondel nutzt, eingesetzt werden kann. Damit können die teilweise erheblichen Kosten für den Abriss und/oder die Entsorgung des bestehenden Turms eingespart werden. Ferner entfallen auch die Kosten und der Zeitaufwand für die Errichtung eines neuen Turms bzw. können deutlich reduziert werden. Schließlich ist mit der hier beschriebenen Lösung auch eine signifikante Ressourceneinsparung verbunden. Insgesamt erhöht die hier beschriebene Lösung die Wirtschaftlichkeit des Repowerings bzw. der neuen Windenergieanlage deutlich.

Weitere Vorteile ergeben sich insbesondere auch durch die Möglichkeit der Wiederwendung der übrigen Infrastruktur wie z.B. Wegebau, Kabel etc., was positive Effekte sowohl auf die Nachhaltigkeit und Ressourcenschonung als auch im Hinblick auf die Wirtschaftlichkeit hat. Zudem kann auch eine Beschleunigung im Genehmigungs- und Umsetzungsprozess erzielt werden.

## Patentansprüche

1. Verfahren (1000) zur Errichtung und/oder Umrüstung einer Windenergieanlage (100a, b),
umfassend:
- Demontieren einer ersten Gondel (104a) von einem Turm (102a, b) einer Windenergieanlage,
- Montieren einer zweiten Gondel (104b) auf dem Turm (102a, b) der Windenergieanlage.

2. Verfahren (1000) nach dem vorhergehenden Anspruch,
**dadurch gekennzeichnet, dass**:
- der Turm (102a, b) der Windenergieanlage vor dem Montieren der zweiten Gondel (104b) mit der ersten Gondel (104a) betrieben wurde, insbesondere für mehr als 1 Jahr, vorzugsweise für mehr als 5 Jahre oder mehr als 10 Jahre.

3. Verfahren (1000) nach mindestens einem der vorhergehenden Ansprüche,
**dadurch gekennzeichnet, dass**:
- der Turm (102a, b) der Windenergieanlage vor dem Montieren der zweiten Gondel (104b) in seiner Höhe verändert, vorzugsweise reduziert, wird, insbesondere durch Entfernen und/oder Ersetzen und/oder Hinzufügen von Turmabschnitten, insbesondere am oberen Ende des Turms, und/oder um mindestens 3%, vorzugsweise mindestens 5%, insbesondere 10% oder mindestens 15%.

4. Verfahren (1000) nach mindestens einem der vorhergehenden Ansprüche,
**dadurch gekennzeichnet, dass**:
- ein Rotor (106b) der zweiten Gondel (104b) einen größeren Rotordurchmesser aufweist als ein Rotor (106a) der ersten Gondel (106a), insbesondere einen um mindestens 10%, vorzugsweise mindestens 25%, insbesondere 50% oder mindestens 70%, größeren Rotordurchmesser, und/oder
- die Windenergieanlage mit der zweiten Gondel (104b) eine höhere Nennleistung aufweise als mit der ersten Gondel (104a), insbesondere eine um mindestens 10%, vorzugsweise mindestens 25%, insbesondere 50% oder mindestens 70%, größere Nennleistung.

5. Verfahren (1000) nach mindestens einem der vorhergehenden Ansprüche,
**gekennzeichnet durch**:
- Nutzen einer ersten elektrischen, vorzugsweise erweiterten, Infrastruktur des Turms mit der zweiten Gondel, und/oder
- Austauschen der ersten elektrischen Infrastruktur des Turms gegen eine zweite elektrische Infrastruktur und Nutzen der zweiten elektrischen Infrastruktur mit der zweiten Gondel, wobei vorzugweise die zweite elektrische Infrastruktur eine höhere Leistung aufweist als die erste elektrische Infrastruktur.

6. Verfahren (1000) nach mindestens einem der vorhergehenden Ansprüche,
**dadurch gekennzeichnet, dass**:
- die Windenergieanlage nach dem Montieren der zweiten Gondel (104b) eine Gesamthöhe von maximal 200m aufweist, und/oder
- die Windenergieanlage mit der ersten Gondel (104a) eine Gesamthöhe von maximal 200m aufweist.

7. Verfahren (1000) nach mindestens einem der vorhergehenden Ansprüche,
**dadurch gekennzeichnet, dass**:
- der Turm (102a, b) ganz oder teilweise als Betonturm ausgebildet ist, und/oder
- der Turm (102a, b) ganz oder teilweise als Stahlturm ausgebildet ist, und/oder
- ein oberer Abschnitt des Turms (102a, b), insbesondere ein zur Aufnahme der ersten Gondel (104a) und/oder zweiten Gondel (104b) ausgebildeter Abschnitt, ein, zwei oder mehrere Stahlsegmente umfasst oder aus diesen besteht.

8. Verfahren (1000) nach mindestens einem der vorhergehenden Ansprüche,
**gekennzeichnet durch**:
- Demontieren eines, zwei, mehrere oder aller Stahlsegmente des Turms, insbesondere nach Demontage der ersten Gondel (104a) und/oder vor Montage der zweiten Gondel (104b), und/oder
- Montieren eines, zweier oder mehrere zweiter Stahlsegmente, insbesondere nach Demontage der ersten Gondel und/oder vor Montage der zweiten Gondel (104b), insbesondere zum Anschluss der zweiten Gondel auf dem Turm (102a, b).

9. Verfahren (1000) nach mindestens einem der vorhergehenden Ansprüche,
**gekennzeichnet durch**:
- Ertüchtigen des Turms (102a, b), insbesondere durch Vorsehen einer, insbesondere zusätzlichen, externen Verspannung und/oder durch Vorsehen einer Faserverstärkung, insbesondere einer Kohlefaserverstärkung, vorzugsweise zur Erbringung des Nachweises einer Lebensdauer von mindestens 5 Jahren, insbesondere mindestens 10 Jahre, vorzugsweise bis zu 20 Jahren nach Montage der zweiten Gondel (104b).

10. Verwendung eines Turms (102a, b) einer zuvor mit einer ersten Gondel (104a) betriebenen Windenergieanlage (100a, b) mit einer zweiten Gondel (104b).

11. Windenergieanlage(100a, b), umfassend einen Turm (102a, b), und eine auf dem Turm angeordnete Gondel,
**dadurch gekennzeichnet, dass** der Turm (102a, b) ein höheres Betriebsalter aufweist als die Gondel (104b), insbesondere ein um ein Vielfaches höheres Betriebsalter, vorzugsweise ein Betriebsalter, das um mehrere Jahre, insbesondere mehr als 10 Jahre, älter ist als das der Gondel.

12. Windenergieanlage (100a, b) nach dem vorhergehenden Anspruch, **dadurch gekennzeichnet, dass** die Windenergieanlage eine Gesamthöhe (GHb) von maximal 200m aufweist.

13. Windenergieanlage (100a, b) nach mindestens einem der beiden vorhergehenden Ansprüche,
**dadurch gekennzeichnet, dass** der Turm (102a, b) an seinem oberen Abschnitt, insbesondere zur Aufnahme der Gondel (104b), ein, zwei oder mehrere Stahlsegmente, aufweist, die übrigen Abschnitte des Turms ein höheres Betriebsalter aufweisen als das bzw. die Stahlsegmente, insbesondere ein um ein Vielfaches höheres Betriebsalter, vorzugsweise ein Betriebsalter, das um mehrere Jahre, insbesondere mehr als 10 Jahre, älter ist als das der Stahlsegmente.

14. Windenergieanlage (100a, b) nach mindestens einem der vorhergehenden Ansprüche 11-13,
**dadurch gekennzeichnet, dass** die Windenergieanlage in einem Verfahren (1000) nach mindestens einem der vorhergehenden Ansprüche 1-9 errichtet und/oder umgerüstet wurde.
